# EUROPEAN PATENT APPLICATION

(11) **EP 3 051 541 A1**
(43) Date of publication of application: **03.08.2016**
(21) Application number: 14839089.1
(22) Date of filing: 15.07.2014
(51) Int. Cl.: H01B 7/295, C08K 5/521, C08K 5/5313, C08L 23/06, C08L 25/04, C08L 71/12, H01B 3/44, H01B 7/02

(54) **HALOGEN-FREE FLAME-RETARDANT INSULATED WIRE**

(30) Priority: 27.08.2013 JP 2013175883
(71) Applicant: Sumitomo Electric Industries, Ltd., Osaka-shi, Osaka 541-0041 (JP)
(72) Inventor: FUJITA, Taro, Osaka-shi Osaka 554-0024 (JP); HAYAMI, Hiroshi, Osaka-shi Osaka 554-0024 (JP); NISHIKAWA, Shinya, Osaka-shi Osaka 554-0024 (JP); OCHI, Yuji, Kanuma-shi Tochigi 322-8585 (JP); HORI, Kenji, Kanuma-shi Tochigi 322-8585 (JP)
(74) Representative: Boult Wade Tennant
(86) International application number: PCT/JP2014/068776
(87) International publication number: WO 2015/029621

(57) **Abstract**

Provided is a halogen-free flame-retardant insulated electric wire having high hot water resistance and having insulation resistance, flame retardancy, abrasion resistance, and heat deformation resistance which are highly balanced. The halogen-free flame-retardant insulated electric wire includes a conductor and a halogen-free insulating layer that covers the conductor. The insulating layer includes an outer layer composed of a cross-linked product of a resin composition containing a total of 100 parts by mass of a resin component in which 25 to 30 parts by mass of a polyphenylene ether-based resin and 10 to 30 parts by mass of a styrene-based elastomer are finely dispersed in 40 to 65 parts by mass of a high-density polyethylene having a melt flow rate of 0.60 or less, and relative to the resin component, 5% to 50% by mass of a metal phosphinate, 6% to 25% by mass of a phosphoric acid ester, and 1% to 10% by mass of a polyfunctional monomer, and an inner layer composed of a cross-linked polyethylene. A thickness of the inner layer is 10% to 85% of a total of the thickness of the inner layer and a thickness of the outer layer.

## Description

### Technical Field

The present invention relates to a halogen-free flame-retardant insulated electric wire including an insulating coating which does not contain a halogen and in which insulation resistance, flame retardancy, abrasion resistance, hot water resistance, heat deformation resistance, etc. are highly balanced, the halogen-free flame-retardant insulated electric wire being suitably used as, for example, a wire harness for an automobile or a railway vehicle.

### Background Art

Insulated electric wires used as, for example, wire harnesses for automobiles or railway vehicles may be exposed to unfavorable conditions such as a temperature change from coldness to a high temperature, vibrations, and wind and rain, and may be exposed to heat or fire generated from a device, or the like. Therefore, insulating coatings of such insulated electric wires are required to satisfy predetermined standards regarding mechanical strength, insulation resistance, hot water resistance (stability), flame retardancy, abrasion resistance, heat deformation resistance, etc. so that the insulated electric wires can be stably used even under such unfavorable conditions, and acceptance criteria are specified by, for example, the ISO standards, which are international standards.

As a material of a flame-retardant insulating coating film, polyvinyl chloride (PVC) is known. A method for providing flame retardancy to an insulating coating film by adding a halogen-based flame retardant is also known. However, recently, in order to prevent environmental problems, so-called halogen-free insulating materials, which do not contain PVC or a halogen-based flame retardant, have been desired. In addition, for railway vehicles, the use of halogen-free insulating materials in which emission of smoke is suppressed in the case of combustion is often originally specified by standards so that passengers can easily evacuate in the case of a fire.

Another known example of a halogen-free insulating material used in an insulating coating film is a material obtained by adding a halogen-free flame retardant such as magnesium hydroxide, aluminum hydroxide, or a nitrogen-based flame retardant to an insulating resin such as a polyolefin resin. However, in order to satisfy flame retardancy, the halogen-free flame retardant needs to be added in a larger amount than a halogen-based flame retardant, which may easily cause problems such as a decrease in the flexibility of the insulating coating film and a decrease in the initial tensile elongation and tensile elongation after heat-resistant aging of the insulating coating film.

Another known halogen-free resin composition having good flame retardancy, mechanical strength, insulation resistance, and heat deformation resistance is a flame-retardant resin composition containing a thermoplastic resin, a polyfunctional monomer, an organophosphorus-based flame retardant. For example, PTL 1 discloses a flame-retardant resin composition that contains a thermoplastic resin containing 5% by mass or more of a resin having a carbon-carbon unsaturated bond or a resin having a carbonyl group, a polyfunctional monomer, and a specific organophosphorus-based flame retardant, in which the contents of the polyfunctional monomer and the organophosphorus-based flame retardant are within specific ranges, and describes that the flame-retardant resin composition can be used as an insulating tube or the like.

### Citation List

### Patent Literature

PTL 1: Japanese Unexamined Patent Application Publication No. 2011-099084

### Summary of Invention

### Technical Problem

However, recently, higher properties have been required for insulated electric wires for automobiles and railway vehicles, and it has become difficult for existing halogen-free flame-retardant resin compositions to satisfy such required properties. For example, a halogen-free flame-retardant resin composition that passes "the DC stability test relating to hot water resistance (stability) of insulation performance" required in the EN50306-2 standard, which is a standard specifying a signal line for railway vehicles, has not yet been obtained. Thus, an insulated electric wire that sufficiently satisfies recent strict requirements has not been obtained.

An object of the present invention is to provide a halogen-free flame-retardant insulated electric wire which has high hot water resistance of insulation performance, the hot water resistance passing the DC stability test required in the EN50306-2 standard, and in which insulation resistance, flame retardancy, abrasion resistance, and heat deformation resistance are highly balanced.

### Solution to Problem

An embodiment of the present invention is a halogen-free flame-retardant insulated electric wire including a conductor and a halogen-free insulating layer that covers the conductor, in which the insulating layer includes
an outer layer composed of a cross-linked product of a resin composition containing a total of 100 parts by mass of a resin component in which 25 to 30 parts by mass of a polyphenylene ether-based resin and 10 to 30 parts by mass of a styrene-based elastomer are finely dispersed in 40 to 65 parts by mass of a high-density polyethylene having a melt flow rate of 0.60 or less, and
relative to the resin component, 5% to 50% by mass of a metal phosphinate, 6% to 25% by mass of a phosphoric acid ester, and 1% to 10% by mass of a polyfunctional monomer, and
an inner layer composed of a cross-linked polyethylene, and
a thickness of the inner layer is 10% to 85% of a total of the thickness of the inner layer and a thickness of the outer layer.

### Advantageous Effects of Invention

The halogen-free flame-retardant insulated electric wire of the present invention has high hot water resistance of insulation performance, the hot water resistance passing the DC stability test required in the EN50306-2 standard, and has insulation resistance, flame retardancy, abrasion resistance, and heat deformation resistance which are highly balanced. Accordingly, the halogen-free flame-retardant insulated electric wire can be suitably used as an electric wire used in a high-temperature environment, for example, wiring in the engine room of automobiles.

### Brief Description of Drawings

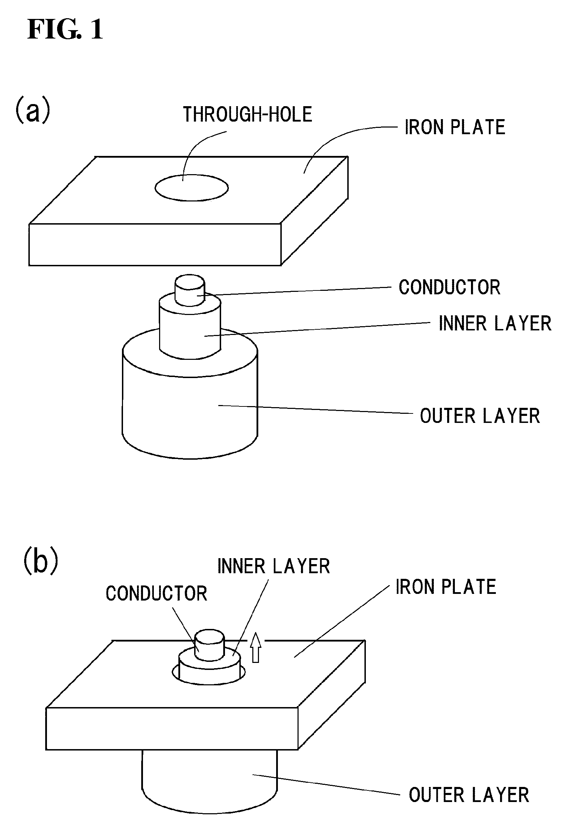

[Fig. 1] Figure 1 includes schematic perspective views showing a device for measuring an inner layer drawing force.

### Description of Embodiments

Embodiments for carrying out the present invention will now be described. However, the scope of the present invention is not limited to the embodiments, and various modifications can be made as long as the object of the present invention is not impaired.

As a result of intensive studies performed in order to achieve the above object, the inventor of the present invention found that a halogen-free flame-retardant insulated electric wire having high hot water resistance of insulation performance, the hot water resistance passing the DC stability test required in the EN50306-2 standard, and having insulation resistance, flame retardancy, abrasion resistance, and heat deformation resistance which are highly balanced can be obtained by
adopting an insulating coating having a two-layer (or multilayer) structure,
forming an outer layer side by using a cross-linked product of a resin composition containing a polymer alloy in which a polyphenylene ether-based resin and a styrene-based elastomer are finely dispersed in a high-density polyethylene having a melt flow rate of 0.60 or less, a metal phosphinate, a phosphoric acid ester, and a polyfunctional monomer in a composition ratio in a particular range, and
forming an inner layer side by using a cross-linked polyethylene. This finding resulted in the completion of the present invention.

An embodiment of the present invention is a halogen-free flame-retardant insulated electric wire including a conductor and a halogen-free insulating layer that covers the conductor, in which the insulating layer includes
an outer layer composed of a cross-linked product of a resin composition containing a total of 100 parts by mass of a resin component in which 25 to 30 parts by mass of a polyphenylene ether-based resin and 10 to 30 parts by mass of a styrene-based elastomer are finely dispersed in 40 to 65 parts by mass of a high-density polyethylene having a melt flow rate of 0.60 or less, and
relative to the resin component, 5% to 50% by mass of a metal phosphinate, 6% to 25% by mass of a phosphoric acid ester, and 1% to 10% by mass of a polyfunctional monomer, and
an inner layer composed of a cross-linked polyethylene, and
a thickness of the inner layer is 10% to 85% of a total of the thickness of the inner layer and a thickness of the outer layer.

The insulating layer of the flame-retardant insulated electric wire has a multilayer structure including at least two layers of an outer layer disposed on a surface of the insulating layer and an inner layer that is in contact with a conductor (if necessary, another layer may be disposed between the inner layer and the outer layer). This insulating layer has high hot water resistance (property that insulation performance is not decreased by storage in hot water), and insulation resistance, flame retardancy, abrasion resistance, and heat deformation resistance that are highly balanced. The outer layer mainly contributes to the flame retardancy, and the inner layer mainly contributes to the improvement in hot water resistance.

The resin component constituting the outer layer is a polymer alloy in which a polyphenylene ether-based resin serving as a hard material and a styrene-based elastomer serving as a soft component are finely dispersed in a high-density polyethylene. A high-density polyethylene having a melt flow rate (hereinafter abbreviated as "MFR") of 0.60 or less, that is, a relatively high molecular weight is used as the high-density polyethylene. These features can provide an insulating layer that satisfies abrasion resistance required in the ISO standards and also satisfies flexibility.

The term "high-density polyethylene" refers to a polyethylene having a density of 0.942 g/cm³ or more and covers both homopolyethylene and polyethylene copolymers. The smaller MFR of a high-density polyethylene, the higher the mechanical strength and the better abrasion resistance of the high-density polyethylene. Thus, abrasion resistance can be improved by selecting a high-density polyethylene having an MFR of 0.60 or less. When the MFR exceeds 0.60, good abrasion resistance is not easily obtained. Note that the MFR is a value that represents a fluidity of a resin and that is measured at 230°C with a load of 2.16 kgf in accordance with JIS K 7210. The MFR is represented in units of g/10 min.

The MFR of the high-density polyethylene is preferably 0.15 or more and 0.30 or less. When the MFR is 0.30 or less, abrasion resistance further improves. An MFR of less than 0.15 is not preferable because extrusion moldability decreases. Accordingly, in a preferred embodiment of the present invention, the high-density polyethylene is a high-density polyethylene having an MFR of 0.15 or more and 0.30 or less.

An example of the polyphenylene ether-based resin is a simple polyphenylene ether resin obtained by oxidative polymerization of 2,6-xylenol. Alternatively, a modified polyphenylene ether resin obtained by melt-blending polystyrene with polyphenylene ether may also be used. The use of the modified polyphenylene ether resin is preferable because workability during melt-blending of the polyphenylene ether-based resin with a high-density polyethylene and a styrene-based elastomer improves and extrusion moldability for forming an insulating coating improves. A polyphenylene ether-based resin obtained by, as required, blending a resin in which a carboxylic acid such as maleic anhydride is introduced may also be used.

Examples of the styrene-based elastomer include styrene-ethylene butene-styrene copolymers, styrene-ethylene propylene-styrene copolymers, styrene-ethylene-ethylene propylene-styrene copolymers, styrene-butylene-styrene copolymers, and hydrogenated polymers and partially hydrogenated polymers of any of these copolymers. A styrene-based elastomer in which a carboxylic acid such as maleic anhydride is introduced may be blended as required, and used.

Among the styrene-based elastomers, elastomers which are block copolymers of styrene and a rubber component are preferably used because extrusion moldability, tensile elongation at break, and flexibility are improved. Examples of the preferable block copolymers include styrene-ethylene butylene-styrene block copolymers (SEBS) having a styrene/ethylene butylene ratio of 30:70 to 60:40, styrene-ethylene butylene-ethylene block copolymers (SEBC), and styrene-ethylene ethylene propylene-styrene block copolymers (SEEPS).

The resin component is a polymer alloy in which a polyphenylene ether-based resin and a styrene-based elastomer are finely dispersed in a high-density polyethylene. The phrase "finely dispersed" refers to a state where domains of a polyphenylene ether-based resin and a styrene-based elastomer each having a submicron size are uniformly dispersed in a high-density polyethylene. In order to achieve a uniform dispersion, mixing is preferably performed with a high-shear twin-screw kneading extruder.

When the total of the resin component is assumed to be 100 parts by mass, the content of the high-density polyethylene is 40 to 65 parts by mass, the content of the polyphenylene ether-based resin is 25 to 30 parts by mass, and the content of the styrene-based elastomer is 10 to 30 parts by mass. When the content of the high-density polyethylene is less than 40 parts by mass, it is difficult to prepare a polymer alloy by finely dispersing the polyphenylene ether-based resin and the styrene-based elastomer in the high-density polyethylene, and abrasion resistance decreases. When the content of the high-density polyethylene exceeds 65 parts by mass, flame retardancy decreases.

The polyphenylene ether-based resin is a hard material having high heat resistance, and is a resin having high flame retardancy. On the other hand, the styrene-based elastomer provides flexibility to the resin composition. Therefore, when the content of the styrene-based elastomer is less than 10 parts by mass, the flexibility decreases. When the content of the styrene-based elastomer exceeds 30 parts by mass, abrasion resistance decreases. When the content of the polyphenylene ether-based resin exceeds 30 parts by mass, the flexibility decreases. When the content of the polyphenylene ether-based resin is less than 25 parts by mass, heat resistance, abrasion resistance, and flame retardancy decrease.

The resin composition is cross-linked, and as a result of the cross-linking, heat resistance and mechanical strength are improved. An example of the method of cross-linking is a method including irradiation with ionizing radiation. Examples of the ionizing radiation include electromagnetic waves such as y rays, X rays, and ultraviolet rays, and corpuscular rays such as α rays. From the viewpoint of the ease of control, simplicity of the use of a radiation source, the transmission thickness of the ionizing radiation, the rate of a cross-linking process, etc., electron beams are preferable.

The resin composition forming the outer layer contains a metal phosphinate, a phosphoric acid ester, and a polyfunctional monomer in addition to the resin component described above. The metal phosphinate is a compound represented by a formula (I) below.

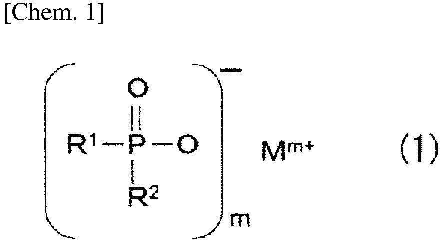

In the formula, R¹ and R² each represent an alkyl group having 1 to 6 carbon atoms or an aryl group having 12 or less carbon atoms, M represents calcium, aluminum, or zinc, when M represents aluminum, m = 3, and when M represents calcium or zinc, m = 2. Examples of the metal phosphinate that can be used include aluminum salts of an organic phosphinic acid, such as EXOLIT OP1230, EXOLIT OP1240, EXOLIT OP930, and EXOLIT OP935; and blended products of an aluminum salt of an organic phosphinic acid and melamine polyphosphate, such as EXOLIT OP1312, all of which are manufactured by Clariant K.K.

The content of the metal phosphinate is 5% to 50% by mass of the resin component (5 to 50 parts by mass relative to 100 parts by mass of the resin component). When the content of the metal phosphinate is less than 5% by mass, flame retardancy of the insulating layer is insufficient. When the content of the metal phosphinate exceeds 50% by mass, mechanical strength decreases and abrasion resistance etc. are insufficient.

The phosphoric acid ester functions as a flame retardant, and thus is added to the resin composition. The content of the phosphoric acid ester is 6% to 25% by mass relative to the resin component. When the content of the phosphoric acid ester is less than 6% by mass, flame retardancy is insufficient. When the content of the phosphoric acid ester exceeds 25% by mass, mechanical properties of the insulating layer decrease.

Phosphoric acid esters having high phosphorus contents and phosphoric acid esters having high molecular weights and high meting points significantly improve flame retardancy, and thus are preferable as the phosphoric acid esters. Accordingly, condensed phosphoric acid esters are preferable. In particular, bisphenol A bis-diphenyl phosphate is preferably used.

Examples of the phosphoric acid ester further include resorcinol bis-dixylenyl phosphate, resorcinol bis-diphenyl phosphate, triphenyl phosphate, triphenyl phosphate, trimethyl phosphate, triethyl phosphate, tricresyl phosphate, trixylenyl phosphate, cresyl phenyl phosphate, cresyl 2,6-xylenyl phosphate, 2-ethylhexyldiphenyl phosphate, 1,3-phenylene bis(diphenyl phosphate), 1,3-phenylene bis(di-2,6-xylenyl phosphate), bisphenol A bis(diphenyl phosphate), octyl diphenyl phosphate, diethylene ethyl ester phosphate, dihydroxy propylene butyl ester phosphate, ethylene disodium ester phosphate, t-butylphenyl diphenyl phosphate, bis-(t-butylphenyl) phenyl phosphate, tris-(t-butylphenyl) phosphate, isopropyl phenyl diphenyl phosphate, bis-(isopropyl phenyl) diphenyl phosphate, tris-(isopropyl phenyl) phosphate, tris-(2-ethylhexyl) phosphate, tris(butoxyethyl) phosphate, and tris-isobutyl phosphate.

The polyfunctional monomer functions as a cross-linking aid when the resin component is cross-linked by irradiation with ionizing radiation. A polyfunctional monomer having a plurality of carbon-carbon double bonds in its molecule, such as trimethylolpropane trimethacrylate, triallyl cyanurate, or triallyl isocyanurate, is preferably used as the polyfunctional monomer. The polyfunctional monomer is preferably liquid at room temperature. In particular, trimethylolpropane trimethacrylate is preferable because it has high compatibility with the resin component.

The content of the polyfunctional monomer is 1% to 10% by mass relative to the resin component. When the content of the polyfunctional monomer is less than 1% by mass, a cross-linking efficiency is low and properties such as heat resistance decrease. When the content of the polyfunctional monomer exceeds 10% by mass, mechanical properties decrease.

The resin composition forming the outer layer can be prepared by mixing these materials using a known melt mixer such as a single-screw kneading extruder, a twin-screw kneading extruder, a pressure kneading machine, or a Banbury mixer. A polymer alloy in which a polyphenylene ether-based resin and a styrene-based elastomer are finely dispersed in a high-density polyethylene can be formed by mixing the above essential components at a specific ratio by using such a known melt mixer.

The polyethylene used for forming the inner layer may be any of low-density polyethylene, intermediate-density polyethylene, and high-density polyethylene. Among these, high-density polyethylene is preferable in terms of high abrasion resistance. The polyethylene forming the inner layer is a cross-linked polyethylene. The cross-linking can be performed as with the cross-linking of the resin component forming the outer layer. In the case where cross-linking is conducted by irradiation with ionizing radiation, a method in which the outer layer and the inner layer are formed by using resins before cross-linking, and the resins of the outer layer and the inner layer are then cross-linked at the same time by irradiating the resulting insulated electric wire with ionizing radiation is preferable in terms of high efficiency.

By cross-linking the polyethylene forming the inner layer, mechanical strength of the insulating layer, in particular, heat deformation resistance is improved. The degree of cross-linking is preferably determined so that a gel fraction becomes 50% or more. Herein, the term "gel fraction" refers to a value determined as follows. A sample is immersed in xylene at 120°C and heated for 24 hours. Subsequently, insoluble matter is separated and dried, and a weight of the sample is then measured. A value calculated as a percentage of the weight relative to a weight of the sample before the immersion is defined as the gel fraction. In contrast, when the polyethylene that forms the inner layer is not cross-linked, good heat deformation resistance is not obtained. Accordingly, a resin which has a tertiary carbon atom in the chemical structure thereof and which can be degraded by radiation, for example, polypropylene is not preferable as the resin used for forming the inner layer.

In order to accelerate cross-linking of polyethylene, a cross-linking aid such as the above polyfunctional monomer may be added to the inner layer. In addition to the essential components described above, additives such as an antioxidant, an antioxidant, a processing aid, and a color pigment may be added to the outer layer and the inner layer, as required. These additives may be added alone or in combination of two or more additives.

The thickness of the inner layer is 10% to 85% and preferably 15% to 80% of the total of the thickness of the inner layer and the thickness of the outer layer. When the thickness of the inner layer is less than 10% of the total of the thicknesses of the inner layer and the outer layer, hot water resistance decreases and hot water resistance that passes the DC stability test required in the EN50306-2 standard is not obtained. When the thickness of the inner layer exceeds 85% of the total of the thicknesses of the inner layer and the outer layer, flame retardancy decreases.

The thickness of the outer layer is preferably 0.03 mm or more and more preferably 0.04 mm or more. The thickness of the inner layer is preferably 0.03 mm or more. When the thickness of the outer layer is less than 0.03 mm, flame retardancy is insufficient. When the thickness of the inner layer is less than 0.03 mm, hot water resistance decreases, and a case where the DC stability test required in the EN50306-2 standard is not passed may also easily occur. Accordingly, in a preferred embodiment of the present invention, the thickness of the outer layer is 0.03 mm or more and the thickness of the inner layer is 0.03 mm or more. The thickness of the insulating layer can be appropriately selected in accordance with the diameter of a conductor. However, since the insulated electric wire of the present invention has good abrasion resistance, even when the thickness of the insulating layer is 0.25 mm or less, the insulated electric wire can satisfy the required properties. When the thickness of the insulating layer is 0.25 mm or less, wiring in a narrow space can be realized and the handling of the insulated electric wire becomes easy.

Examples of the conductor included in the insulated electric wire include copper and aluminum, which have good electrical conductivity. The conductor may be a single wire or a stranded wire including a plurality of wires.

In each of the cases of the outer layer and the inner layer, the insulating coating can be formed by using a known extrusion molding machine such as a melt extruder. A conductor wire may be coated with a resin (composition) of an inner layer, the resin may be cross-linked, subsequently, the resulting conductor wire may be coated with a resin composition of an outer layer, and the resin may be cross-linked. Alternatively, a conductor wire may be coated with a resin (composition) of an inner layer, and then coated with a resin composition of an outer layer, and subsequently, the resulting conductor wire may be irradiated with ionizing radiation to cross-link the resins of the inner layer and the outer layer at the same time. Alternatively, a conductor wire may be coated with a resin (composition) of an inner layer and a resin (composition) of an outer layer at the same time by using a two-layer extrusion molding machine, and subsequently, the resulting conductor wire may be irradiated with ionizing radiation to cross-link the resins of the inner layer and the outer layer at the same time.

### EXAMPLES

First, materials used in Examples and Comparative Examples are described below.

### [High-density polyethylene (PE)]

- A high-density polyethylene having an MFR of 0.25 and a density of 0.961 g/cm³ (HI-ZEX 520MB, manufactured by Prime Polymer Co., Ltd.)

### [Polyphenylene ether-based resin]

- Modified PPE: XYRON (Registered trademark) X9102, manufactured by Asahi Kasei Chemicals Corporation

### [Styrene-based elastomer]

- SEBS: Tuftec (Registered trademark) H1041, manufactured by Asahi Kasei Chemicals Corporation
- SEBC: DYNARON (Registered trademark) 4600P, manufactured by JSR Corporation

- Bisphenol A bis-diphenyl phosphate: CR741, manufactured by Daihachi Chemical Industry Co., Ltd.
- TMPTMA: Trimethylolpropane trimethacrylate

- EVA: Evaflex EV360 (manufactured by Du pont-Mitsui Polychemicals Co., Ltd., VA content 25% by mass, MFR = 2)
- Metal phosphinate: Exolit OP930 (manufactured by Clariant K.K.)
- Magnesium hydroxide: KISUMA 5P (manufactured by Kyowa Chemical Industry Co., Ltd.)
- Hindered phenol-based antioxidant: IRGANOX 1010 (manufactured by BASF Japan Ltd.)

### Examples 1 to 4 and Comparative Examples 1 to 7

### (Preparation of resin composition pellets)

Components for each of an outer layer and an inner layer were mixed so as to have the compositions shown in Tables I and II. The components were melt-mixed by using a twin-screw mixer (45 mm φ, L/D = 42) at a cylinder temperature of 240°C and at a number of screw revolutions of 200 rpm. Each of the resulting mixtures was melt-extruded into strands. Subsequently, the melted strands were cooled and cut to prepare pellets.

### (Preparation of insulated electric wire)

An inner layer was formed by extruding the resin for an inner layer on a conductor (stranded wire including 19 annealed copper wires each having a diameter of 0.16 mm φ) having a cross-sectional area of 0.35 mm² using a single-screw extruder (30 mm φ, L/D = 24) so as to have the wall thickness shown in Tables I and II. After cooling, an outer layer was formed by extruding the resin for an outer layer on the inner layer using the same single-screw extruder so as to have the wall thickness shown in Tables I and II. After cooling, the resulting conductor coated with the inner layer and the outer layer was irradiated with an electron beam at an acceleration voltage of 2 MeV with a dose of 120 kGy to cross-link the resins. Thus, an insulated electric wire was prepared. For the insulated electric wire, measurement of an insulation resistance, a current application test, measurement of flame retardancy, a hot set test, measurement of abrasion resistance, and measurement of an inner layer drawing force (adhesive strength between inner layer and outer layer) were performed by the methods described below. The results are shown in Tables III and IV.

### (Measurement of insulation resistance)

The insulation resistance was measured in accordance with the method described in "4.7 Insulation resistance" of JIS C 3005. The measurement was performed at an applied voltage of 50 to 500 V.

### (Current application test) [Evaluation of hot water resistance]

### 1) Hot water resistance test in accordance with ISO 6722

An insulated electric wire having a length of 25 m and wound three turns or more was immersed in a 1% saline solution at 85°C. A current was passed for seven days while applying a direct-current voltage of 48 V between the insulated electric wire and an electrode immersed in the saline solution. This current application for seven days was performed five times. In the case where the insulation resistance after the current application for a total of 35 days was 10⁹ Ω·mm or more, the insulated electric wire was evaluated as "acceptable".

### 2) DC stability test in accordance with EN50306-2

An insulated electric wire was immersed in a 3% saline solution at 85°C. A current was passed for 10 days while applying a direct-current voltage of 300 V between the insulated electric wire and an electrode immersed in the saline solution. In the case where, after the current application for 10 days, the insulated electric wire had a withstand voltage where an alternating voltage of 2 kV could be applied for one minute, the insulated electric wire was evaluated as "acceptable". The application of the direct-current voltage was performed in both directions in which the insulated electric wire side functioned as a positive electrode and in which the electrode immersed in the saline solution functioned as a positive electrode.

### (Measurement of flame retardancy)

### 1) 45° inclining combustion test of ISO 6722

An insulated electric wire was tilted by 45° and brought into contact with an inner flame of a Bunsen burner for 15 seconds, and the time (sec) until the flame expired was then measured. In the case where the flame naturally expired within 70 seconds, the insulated electric wire was evaluated as "acceptable". In the case where the time exceeded 70 seconds, the insulated electric wire was evaluated as "unacceptable".

### 2) Test for vertical flame propagation for single insulated wire

A test for vertical flame propagation for a single insulated wire was performed in accordance with JIS C 3665-1.

An insulated electric wire was vertically held with a support member (upper support member). An inner flame of a Bunsen burner was brought into contact with the insulated electric wire at an angle of 45° for a predetermined time (time specified in JIS C 3665-1, the time varying depending on the outer diameter of the insulated electric wire). The burner was then removed so that the flame expired, and the degree of combustion of the sample was examined. In the case where a distance between a lower end of the upper support member and a point of the start of carbonization was 50 mm or more, the insulated electric wire was evaluated as "acceptable". Furthermore, in the case where the combustion spread downward to a position 540 mm or more from the lower end of the upper support member, the insulated electric wire was evaluated as "unacceptable".

### (Hot set test) [Evaluation of heat deformation resistance]

Heat deformation resistance was measured in accordance with the hot set test specified in JIS C 3660-2-1:2003.

A conductor was drawn out from an insulated electric wire to obtain a tube of an insulating layer. The obtained tube was hung in an oven at 200 ± 3°C, and a weight was hung on the lower end of the tube so that a load of 20 N/cm² was applied. The tube was maintained in this state for 15 minutes. After the tube was maintained in this state for 15 minutes, the length of the tube was measured to determine the ratio of the elongation of the tube due to the load relative to the length of the tube before the start of the application of the load (elongation at the time of the application of the load). Subsequently, the load was removed from the tube in the oven, and the tube was then taken out from the oven and cooled to determine the ratio of the elongation of the tube after cooling relative to the length of the tube before the start of the application of the load (elongation at the time of the removal of the load). In the case where the elongation at the time of the application of the load was 100% or less and the case where the elongation at the time of the removal of the load was 25% or less, it was determined that the standard was satisfied.

### (Measurement of abrasion resistance)

The measurement of abrasion resistance was performed in accordance with EN50305-2002: 5.2 Abrasion resistance. A blade of a steel spring wire having a diameter of 0.45 mm was used, and the blade was pressed onto an insulated electric wire at a load of 7 N (20°C) and moved 20 mm. This operation was repeated with a frequency of 60 cycles per minute. In the case where the number of times of abrasion until the blade touched a conductor due to abrasion of the insulating layer was 150 times or more, the insulated electric wire was evaluated as "acceptable".

### (Measurement of inner layer drawing force) [Evaluation of adhesive strength between inner layer and outer layer]

An insulated electric wire was cut, and as shown in Fig. 1(a), an outer layer and an inner layer at an end of the cut portion were removed so that a portion where the outer layer and the inner layer were bonded to each other had a length of 20 mm. A portion of the insulated electric wire (from which the outer layer had been removed) was inserted into an iron plate in which a through-hole having a diameter slightly larger than the outer diameter of the inner layer was formed. The inner layer was drawn in the direction shown by the arrow in Fig. 1(b) while the iron plate was fixed, and a force (inner layer drawing force) necessary for drawing out the inner layer from the outer layer was measured. An inner layer drawing force of 10 N/20 mm or more was evaluated as "acceptable".

**[Table I]**

| | | | Example 1 | Example 2 | Example 3 | Example 4 | Comparative Example 1 | Comparative Example 2 |
|---|---|---|---|---|---|---|---|---|
| Insulating layer | Outer layer | Modified PPE | 28 | 28 | 28 | 28 | 28 | 28 |
| | | SEBS | 12 | 12 | 12 | 12 | 12 | 12 |
| | | SEBC | 10 | 10 | 10 | 10 | 10 | 10 |
| | | PE | 50 | 50 | 50 | 50 | 50 | 50 |
| | | EVA | - | - | - | - | - | - |
| | | Metal phosphinate | 10 | 30 | 45 | 10 | 10 | 10 |
| | | Magnesium hydroxide | - | - | - | - | - | - |
| | | Bisphenol A bis-diphenyl phosphate | 20 | 20 | 20 | 20 | 20 | 20 |
| | | TMPTMA | 2 | 2 | 2 | 2 | 2 | 2 |
| | | Hindered phenol-based antioxidant | 1 | 1 | 1 | 1 | 1 | 1 |
| | | Wall thickness (mm) | 0.185 | 0.185 | 0.185 | 0.045 | 0.025 | 0.205 |
| | Inner layer | PE | 100 | 100 | 100 | 100 | 100 | 100 |
| | | Hindered phenol-based antioxidant | 1 | 1 | 1 | 1 | 1 | 1 |
| | | Wall thickness (mm) | 0.04 | 0.04 | 0.04 | 0.18 | 0.2 | 0.02 |
| | Inner layer thickness x 100/(inner layer thickness + outer layer thickness) (%) | | 18 | 18 | 18 | 80 | 89 | 9 |

**[Table II]**

| | | | Comparative Example 3 | Comparative Example 4 | Comparative Example 5 | Comparative Example 6 | Comparative Example 7 | |
|---|---|---|---|---|---|---|---|---|
| Insulating layer | Outer layer | Modified PPE | 28 | 28 | 28 | - | Inner layer | 28 |
| | | SEBS | 12 | 12 | 12 | - | | 12 |
| | | SEBC | 10 | 10 | 10 | - | | 10 |
| | | PE | 50 | 50 | 50 | - | | 50 |
| | | EVA | - | - | - | 100 | | - |
| | | Metal phosphinate | 10 | - | 10 | - | | 10 |
| | | Magnesium hydroxide | - | - | - | 180 | | - |
| | | Bisphenol A bis-diphenyl phosphate | 20 | 20 | 20 | - | | 20 |
| | | TMPTMA | 2 | 2 | 2 | 2 | | 2 |
| | | Hindered phenol-based antioxidant | | 1 | 1 | 1 | | 1 |
| | | Wall thickness (mm) | 0.225 | 0.185 | 0.185 | 0.185 | | 0.04 |
| | Inner layer | PE | - | 100 | - | 100 | Outer layer | 100 |
| | | PP | - | - | 100 | - | | - |
| | | Hindered phenol-based antioxidant | - | 1 | 1 | 1 | | 1 |
| | | Wall thickness (mm) | 0 | 0.04 | 0.04 | 0.04 | | 0.185 |
| | Inner layer thickness x 100/(inner layer thickness + outer layer thickness) (%) | | 0 | 18 | 18 | 18 | 18 | |

**[Table III]**

| | | | | Example 1 | Example 2 | Example 3 | Example 4 | Comparative Example 1 | Comparative Example 2 |
|---|---|---|---|---|---|---|---|---|---|
| Insulation resistance (MΩ·km) | | | 20°C | 16,000 | 13,500 | 12,000 | 32,400 | 41,000 | 9,300 |
| | | | 90°C | 102 | 53 | 36 | 3,400 | 3,860 | 20 |
| Current application test | ISO 6722 Hot water resistance test | | | Acceptable | Acceptable | Acceptable | Acceptable | Acceptable | Acceptable |
| | EN50306-2 DC stability test | | | Acceptable | Acceptable | Acceptable | Acceptable | Acceptable | Unacceptable |
| Flame retardancy | ISO 6722 45-Degree inclining combustion test | | | Acceptable | Acceptable | Acceptable | Acceptable | Unacceptable | Acceptable |
| | IEC 60332-1 Test for vertical flame propagation for single insulated wire | | | Acceptable | Acceptable | Acceptable | Acceptable | Unacceptable | Acceptable |
| Hot set test | | Elongation at the time of application of load | | 47 | 55 | 60 | 28 | 20 | 52 |
| | | Elongation at the time of removal of load | | 10 | 12 | 20 | 5 | 3 | 12 |
| Abrasion resistance | | 0.45 φ Piano wire, load: 9N | | 320 | 260 | 180 | 270 | 360 | 290 |
| Inner layer drawing force (Adhesiveness between inner layer and outer layer) | | | | 37 | 38 | 33 | 45 | 46 | 30 |

**[Table IV]**

| | | | | Comparative Example 3 | Comparative Example 4 | Comparative Example 5 | Comparative Example 6 | Comparative Example 7 |
|---|---|---|---|---|---|---|---|---|
| Insulation resistance (MΩ·km) | | | 20°C | 6,300 | 21,300 | 23,400 | 8,400 | 38,700 |
| | | | 90°C | 5.4 | 165 | 180 | 45 | 3,650 |
| Current application test | ISO 6722 Hot water resistance test | | | Acceptable | Acceptable | Acceptable | Acceptable | Acceptable |
| | EN50306-2 DC stability test | | | Unacceptable | Acceptable | Acceptable | Acceptable | Acceptable |
| Flame retardancy | ISO 6722 45-Degree inclining combustion test | | | Acceptable | Acceptable | Acceptable | Acceptable | Unacceptable |
| | IEC 60332-1 Test for vertical flame propagation for single insulated wire | | | Acceptable | Unacceptable | Acceptable | Acceptable | Unacceptable |
| Hot set test | | Elongation at the time of application of load | | 65 | 40 | 150 | 30 | 20 |
| | | Elongation at the time of removal of load | | 15 | 8 | 48 | 4 | 3 |
| Abrasion resistance | | 0.45 φ Piano wire, load: 9 N | | 250 | 400 | 70 | 80 | 400 |
| Inner layer drawing force (Adhesiveness between inner layer and outer layer) | | | | - | 42 | 7 | 67 | 36 |

Referring to the results shown in Tables III and IV, the halogen-free flame-retardant insulated electric wires of Examples 1 to 4, which satisfied constituent features of the present invention, had high hot water resistance and were good in terms of insulation resistance, flame retardancy, abrasion resistance, and heat deformation resistance.

However, regarding Comparative Example 1, in which the thickness of the inner layer was 89%, which was more than 85%, of the total of the thicknesses of the inner layer and the outer layer, flame retardancy was low and did not satisfy the standard. On the other hand, regarding Comparative Examples 2 and 3, in which the thickness of the inner layer was less than 10% of the total of the thicknesses of the inner layer and the outer layer, hot water resistance did not satisfy the standard specified in the EN50306-2 DC stability test. Regarding Comparative Example 4, in which a metal phosphinate was not contained, flame retardancy was insufficient.

Regarding Comparative Example 5, in which polypropylene was used instead of a high-density polyethylene, abrasion resistance was insufficient. It is believed that this is because polypropylene is not easily cross-linked. In addition, regarding Comparative Example 5, the adhesive strength between the inner layer and the outer layer was insufficient. It is believed that this is because cross-linking does not occur and the types of resins of the inner layer and the outer layer are different from each other.

Regarding Comparative Example 6, in which ethylene-vinyl acetate (EVA) was used as the resin component, abrasion resistance was insufficient. Regarding Comparative Example 7, in which a cross-linked polyethylene was used in the outer layer and the resin composition of the outer layer of Example 1 was used in the inner layer, flame retardant was insufficient. It is believed that this is because the cross-linked polyethylene having low flame retardancy was used in the outer layer.

## Claims

1. A halogen-free flame-retardant insulated electric wire comprising a conductor and a halogen-free insulating layer that covers the conductor, wherein the insulating layer includes
an outer layer composed of a cross-linked product of a resin composition containing a total of 100 parts by mass of a resin component in which 25 to 30 parts by mass of a polyphenylene ether-based resin and 10 to 30 parts by mass of a styrene-based elastomer are finely dispersed in 40 to 65 parts by mass of a high-density polyethylene having a melt flow rate (MFR) of 0.60 or less, and
relative to the resin component, 5% to 50% by mass of a metal phosphinate, 6% to 25% by mass of a phosphoric acid ester, and 1% to 10% by mass of a polyfunctional monomer, and
an inner layer composed of a cross-linked polyethylene, and
a thickness of the inner layer is 10% to 85% of a total of the thickness of the inner layer and a thickness of the outer layer.

2. The halogen-free flame-retardant insulated electric wire according to Claim 1, wherein the high-density polyethylene is a high-density polyethylene having an MFR of 0.15 or more and 0.30 or less.

3. The halogen-free flame-retardant insulated electric wire according to Claim 1 or 2, wherein the thickness of the outer layer is 0.03 mm or more and the thickness of the inner layer is 0.03 mm or more.
